(19) Europäisches Patentamt
European Patent Office
Office européen des brevets

(11) **EP 4 328 874 A1**

(12) **DEMANDE DE BREVET EUROPEEN**

(43) Date de publication:
**28.02.2024 Bulletin 2024/09**

(21) Numéro de dépôt: **23187695.4**

(22) Date de dépôt: **25.07.2023**

(51) Classification Internationale des Brevets (IPC):
*G06V 40/12* $^{(2022.01)}$

(52) Classification Coopérative des Brevets (CPC):
**G06V 40/1382; G06V 40/1353; G06V 40/1359; G06V 40/1371; G06V 40/1376;** G06V 40/1312

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **26.08.2022 FR 2208571**

(71) Demandeur: **IDEMIA Identity & Security France
92400 Courbevoie (FR)**

(72) Inventeurs:
• **THIEBOT, Alain
92400 Courbevoie (FR)**
• **DOUBLET, Julien
92400 Courbevoie (FR)**
• **BEAUDET, Jean
92400 Courbevoie (FR)**

(74) Mandataire: **Idemia
2, place Samuel de Champlain
92400 Courbevoie (FR)**

(54) **PROCÉDÉ DE VÉRIFICATION DE L AUTHENTICITÉ D'UNE EMPREINTE DIGITALE**

(57) Ledit procédé (30) comporte des étapes de:
- acquisition (300) d'une image de référence, d'une empreinte digitale de référence (50),
- acquisition (301) d'une image candidate d'une empreinte digitale candidate (51),
- comparaison géométrique (306) entre la caractéristique géométrique du motif (I) de ladite empreinte de référence (50) et la caractéristique géométrique du motif (R) de ladite empreinte candidate (51) extraites des images acquises ,
- détermination de cohérence géométrique entre ladite empreinte de référence et ladite empreinte candidate en fonction du résultat de l'étape de comparaison géométrique et des informations ($\alpha_{gc}$, $\alpha_{gr}$) de configuration géométrique digitales de référence et candidate extraites des images acquises,
- prise de décision quant à l'authenticité de ladite empreinte digitale candidate (51) en fonction du résultat de l'étape de détermination de cohérence géométrique.

Figure 2

EP 4 328 874 A1

**Description**

La présente invention concerne un procédé de vérification de l'authenticité d'une empreinte digitale, ainsi qu'un dispositif de vérification de l'authenticité d'une empreinte digitale. Elle trouve application dans le domaine de la reconnaissance biométrique par analyse des empreintes digitales d'une personne.

Il est connu de capturer une image bidimensionnelle d'une empreinte digitale et de comparer cette image à un ensemble d'images de référence d'une base de données de personnes autorisées.

Certains individus mal intentionnés réussissent à reproduire l'empreinte du doigt d'une personne autorisée en réalisant une reproduction de l'empreinte entre autres sur un film. Un tel individu peut alors coller le film sur son propre doigt afin de déjouer la sécurité.

On connaît du document EP3073416 un dispositif de vérification de la véracité d'une empreinte digitale qui permet de vérifier que l'empreinte qui est présentée correspond effectivement au doigt qui la porte, cependant ce dispositif nécessite l'acquisition sans contact d'un modèle tridimensionnel du doigt, ce qui requiert la mise en place d'un dispositif complexe et coûteux ainsi qu'une analyse d'image complexe.

Un des buts de l'invention est de remédier à au moins une partie des inconvénients précités en fournissant un procédé de vérification de l'authenticité d'une empreinte digitale qui, en particulier, permet de vérifier qu'elle ne fait pas l'objet de fraude, notamment par moulage de l'empreinte volée à un tiers autorisé sur le doigt d'une personne non autorisée.

A cet effet, on prévoit, selon l'invention, un procédé de vérification biométrique destiné à vérifier l'authenticité d'une empreinte digitale, le procédé de vérification comportant :

- une étape d'acquisition d'une image de référence, notamment bidimensionnelle, d'une empreinte digitale de référence ,
- une étape d'extraction d'une information de configuration géométrique digitale de référence,
- une étape d'extraction d'une caractéristique géométrique d'un motif de ladite empreinte digitale de référence à partir de ladite image de référence,
- une étape d'acquisition d'une image candidate, notamment bidimensionnelle, d'une empreinte digitale candidate,
- une étape d'extraction d'une information de configuration géométrique digitale candidate
- une étape d'extraction de la caractéristique géométrique d'un motif de ladite empreinte digitale candidate à partir de ladite image candidate,
- une étape de comparaison géométrique entre la caractéristique géométrique du motif de ladite empreinte de référence et la caractéristique géométrique du motif de ladite empreinte candidate , lesdites caractéristiques géométriques des motifs étant de nature locale ;
- puis, une étape de détermination de cohérence géométrique entre ladite empreinte de référence et ladite empreinte candidate en fonction du résultat de l'étape de comparaison géométrique et des informations de configuration géométrique, lesdites informations de configuration géométrique étant de nature globale ;
- une étape de prise de décision quant à l'authenticité de ladite empreinte digitale candidate en fonction du résultat de l'étape de détermination de cohérence géométrique. Le procédé permet ainsi de détecter un fraudeur qui aurait disposé une ou plusieurs fausse(s) empreinte(s) sur ses propres doigts sans connaître l'orientation ou la position exacte de l'empreinte par rapport au doigt. De même, en cas d'acquisition multi-doigts notamment, ce procédé permet de détecter si un fraudeur utilise des faux doigts porteurs de fausses empreintes sans connaître la géométrie de la main qu'il cherche à usurper, et ce, grâce à l'utilisation à la fois les informations issues de la comparaison entre les motifs, et les informations de configuration géométrique telles que positions et angles, sur la base desquelles est vérifiée la compatibilité entre notamment les alignements du motif et la géométrie de la main.

De manière avantageuse, le procédé comporte une étape de comparaison entre l'information de configuration géométrique de référence et l'information de configuration géométrique candidate, et l'étape de détermination de cohérence géométrique entre ladite empreinte de référence et ladite empreinte candidate est fonction de son résultat, ce qui permet une évaluation simple par comparaison de valeurs, dans le cadre notamment d'information de configuration géométriques évaluée individuellement, qu'elles soient angulaires ou de position, a contrario de la résolution ou minimisation liée au(x) modèle(s) multi-doigts dans lesquelles on ne compare pas chaque information individuellement une à une.

Avantageusement, la caractéristique géométrique d'un motif comprend un descriptif géométrique d'un ensemble de minuties dudit motif, le recours à un motif d'empreinte contrairement à une silhouette de doigts permet de disposer de caractéristiques plus précises et robustes, moins dépendantes du mode d'acquisition, et le choix d'un descriptif géométrique d'un ensemble de minuties comme caractéristique géométrique d'un motif permet une mémorisation aisée sous forme de table de points et une robustesse de la comparaison ultérieure, ces minuties étant nombreuses pour une empreinte, ce qui garantit quel que soit le mode d'acquisition d'en extraire suffisamment pour opérer une comparaison significative entre celles de l'empreinte de référence et celles de l'empreinte candidate.

Avantageusement, le procédé comprend :

- une étape de détermination de position d'une extrémité distale et/ou d'un pli de flexion d'une articulation Inter Phalangienne Distale dudit doigt portant le motif de l'empreinte de référence , notamment dans un repère canonique de l'image de référence ;
- une étape de détermination de position d'une extrémité distale et/ou d'un pli de flexion d'une articulation Inter Phalangienne Distale dudit doigt portant le motif de ladite empreinte candidate, notamment dans un repère canonique de l'image candidate, ce qui permet ensuite de manière simple de mettre en oeuvre l'étape de détermination de cohérence géométrique entre l'empreinte de référence et l'empreinte candidate au moyen notamment d'une cohérence de position.

De manière avantageuse, l'information de configuration géométrique comprend respectivement :

- un angle représentatif d'une direction longitudinale digitale globale dans l'image acquise, notamment l'information de configuration géométrique comprend une direction d'un axe de révolution digital représentant l'axe dudit doigt porteur de ladite empreinte notamment dans un repère canonique de l'image acquise
  et/ou
- une position de chacun desdits motifs relativement à une géométrie digitale propre, telle que l'extrémité distale dudit doigt porteur de ladite empreinte et/ou le pli de flexion d'une articulation Inter Phalangienne Distale dudit doigt porteur de ladite empreinte ,
  ce qui permet ensuite sur la base d'une analyse géométrique simple, angulaire et/ou dimensionnelle de caractériser localement l'empreinte par rapport au doigt qui la porte et potentiellement de mémoriser avec l'image acquise, directement lors de l'acquisition de l'image, la direction globale du doigt ou de recaler angulairement le doigt sur l'image acquise de manière à positionner l'axe longitudinal du doigt sur l'axe de référence de manière à annuler l'angle global sur l'image acquise finale de laquelle seront extraites les caractéristiques géométriques du motif de ladite empreinte.

De manière avantageuse, le procédé comprend :

- une étape de calcul d'un angle global de rotation entre ladite empreinte de référence et ladite empreinte candidate ;
- une étape de calcul d'un angle local de rotation entre ladite caractéristique géométrique du motif de ladite empreinte de référence et ladite caractéristique géométrique d'un motif de ladite empreinte candidate, ces calculs de l'information de configuration géométrique sous forme d'angle permet ensuite une comparaison aisée avec l'angle local de rotation pour la vérification de cohérence géométrique, de plus le choix de l'information de configuration géométrique sous forme d'angle permet un calcul plus aisé techniquement contrairement aux calculs basés sur les dimensions puisque dans le cas d'un calcul d'angle le travail de l'image nécessite une mise à iso échelle qui n'est pas requise ici.

Avantageusement, l'étape de détermination de cohérence géométrique comprend :

- une vérification de cohérence géométrique de position au cours de laquelle il est vérifié que les positions relatives entre le motif de l'empreinte de référence et ladite extrémité distale et/ou ledit pli de flexion de l'articulation Inter Phalangienne Distale dudit doigt portant le motif de l'empreinte de référence sont sensiblement identique aux positions relatives entre le motif de l'empreinte candidate et ladite extrémité distale et/ou ledit pli de flexion de l'articulation Inter Phalangienne Distale dudit doigt portant le motif de l'empreinte candidate ;
  et/ou
- une vérification de cohérence géométrique angulaire au cours de laquelle il est vérifié que ledit angle global de rotation et ledit angle local de rotation sont sensiblement identiques ;
  ce qui permet de manière simple de mettre en oeuvre l'étape de détermination de cohérence géométrique entre l'empreinte de référence et l'empreinte candidate au moyen d'une cohérence angulaire, en complément ou en variante de la cohérence de position.

De manière avantageuse, l'étape de calcul d'un angle local de rotation entre ledit motif de ladite empreinte de référence et ledit motif de ladite empreinte candidate comprend une étape de mise en correspondance desdits motifs et de détermination d'une transformation d'alignement entre les deux motifs, telle que transformation affine, translation-homothétie-rotation,
ce qui permet également de couvrir les problématiques liées aux doigts secs ou aux images de mauvaises qualité, et de couvrir les différences de modes d'acquisition, les doigts ou mains pouvant être présentés dans des plans différents, avec des éloignements variés.

Avantageusement, ladite image de référence de l'empreinte digitale de référence est acquise par capture photographique ou vidéo, au moyen d'un dispositif avec ou sans contact, notamment lors d'un enrôlement ou pré-enrôlement à distance ou sur site et ladite image candidate de l'empreinte digitale candidate est acquise par capture photographique ou vidéo, au moyen d'un dispositif avec ou sans contact, notamment lors d'un contrôle de sécurité, ce qui permet d'acquérir aussi bien des images bidimensionnelles que tridimensionnelles, y compris au moyen d'un téléphone pour ce qui est de l'acquisition de la première image et la deuxième image peut ainsi être acquise lors d'un contrôle d'accès ou d'identité.

De manière avantageuse, le procédé comprend également une étape de modélisation multi doigts, ce qui permet de vérifier la cohérence globale au niveau de la main et détecter ainsi des fraudes commises par un fraudeur qui ne reproduit pas la géométrie de la main qu'il cherche à usurper.

Avantageusement, un modèle multi doigts comportant des informations de configuration géométrique est défini pour l'image candidate et l'image de référence dans leur repère canonique respectif, ce qui permet une résolution ou une minimisation des contraintes exprimées dans les référentiels de ces modèles.

De manière avantageuse, lors de l'étape d'acquisition d'image de référence :

- au moins deux images de référence distinctes sont acquises, chacune comportant une empreinte digitale de référence de deux doigts différents d'une même main de référence
  et/ou
- l'image de référence comprend au moins deux empreintes digitales de référence de deux doigts différents d'une même main de référence,
  et en ce que lors de l'étape d'acquisition d'image candidate :
- au moins deux images candidates distinctes sont acquises, chacune comportant une empreinte digitale candidate desdits deux doigts différents homologues d'une main homologue candidate
  et/ou
- l'image candidate comprend au moins deux empreintes digitales candidates de deux doigts différents d'une même main candidate,
  ce qui permet de construire un modèle multi doigts et d'améliorer la détection de fraude en analysant la cohérence pour plusieurs doigts de la main, l'expression « doigts homologues » désignant les doigts portant le même nom dans la main candidate et l'expression « main homologue » fait référence à la main droite ou gauche de manière à comparer la même main, droite ou gauche, d'une paire de mains.

Avantageusement, lors de l'étape d'acquisition d'images de référence, une image est acquise doigts serrés et une autre image est acquise doigts écartés, ce qui permet de limiter les inconnues lors de la construction du modèle multi doigts.

De manière avantageuse, les images acquises d'empreintes digitales comprennent au moins une représentation surfacique de phalange distale du doigt auquel appartient l'empreinte, ce qui permet de pouvoir notamment évaluer des positions relativement au pli de flexion de l'articulation Inter Phalangienne Distale dudit doigt.

En outre, l'invention a aussi pour objet un dispositif de vérification biométrique destiné à vérifier l'authenticité d'une empreinte digitale apte à mettre en oeuvre le procédé de vérification biométrique selon l'invention, présentant les mêmes avantages que l'invention.

D'autres caractéristiques et avantages de l'invention ressortiront à la lecture de la description qui suit de modes de mise en oeuvre particuliers non limitatifs de l'invention.

La figure 1 est une vue schématique du procédé selon l'invention.
La figure 2 illustre une vue schématique d'une partie du procédé conforme à un mode de réalisation de l'invention;
La figure 3 illustre une image acquise comportant les empreintes digitales de plusieurs doigts d'une même main ;
La figure 4 est un exemple de modèle de 4 doigts utilisé dans un mode de réalisation du procédé selon l'invention.

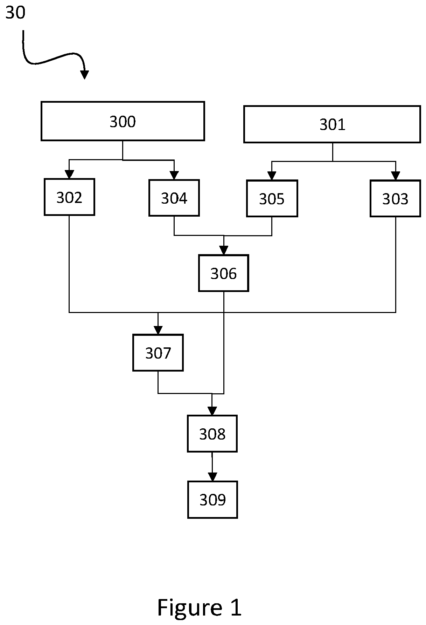

La figure 1 expose un mode de réalisation du procédé 30 de vérification biométrique destiné à vérifier l'authenticité d'une empreinte digitale. Ce procédé a pour but de vérifier la compatibilité entre les alignements des motifs d'empreintes et la géométrie du doigt ou de la main en recourant d'une part à une vérification de cohérence entre les motifs et à une cohérence d'orientation de ces motifs par rapport à la géométrie du doigt ou de la main, notamment en prenant en considération l'orientation. Ces vérifications permettent ainsi de vérifier l'authenticité d'une empreinte digitale et notamment de discriminer une fraude qui viserait à coller en lieu et place des empreintes du fraudeur des empreintes volées sans respecter leur positionnement exact puisque l'orientation des motifs ne serait pas connue du fraudeur ayant volé ces empreintes.

En effet, la détection de fraude aux empreintes digitales est améliorée par la prise en considération de ces deux échelles (locale et globale) permettant de vérifier la compatibilité entre les alignements des motifs d'empreintes et la géométrie du doigt ou de la main, avec :

- les caractéristiques géométriques des motifs I,R des empreintes qui sont par nature locales ; c'est-à-dire propres au dermatoglyphe présent sur le bout du doigt portant l'empreinte considérée, par exemple un motif géométrique détaillé des minuties, ou des crêtes ; et
- les informations de configuration géométrique digitales $\alpha_{gc}$, $\alpha_{gr}$ qui sont par nature globales ; c'est-à-dire propre à la géométrie du doigt portant l'empreinte, par exemple position du motif de l'empreinte relativement à la géométrie du doigt portant l'empreinte, angle représentatif d'une direction longitudinale globale du doigt portant l'empreinte.

Le procédé appliqué à un doigt comporte ici les étapes suivantes :

- une étape d'acquisition 300 d'une image de référence, notamment bidimensionnelle, d'une empreinte digitale de référence ,
- une étape d'extraction 302 d'une information de configuration géométrique digitale de référence,
- une étape d'extraction 304 d'une caractéristique géométrique d'un motif de ladite empreinte digitale de référence à partir de ladite image de référence,
- une étape d'acquisition 301 d'une image candidate, notamment bidimensionnelle, d'une empreinte digitale candidate ,
- une étape d'extraction 303 d'une information de configuration géométrique digitale candidate,
- une étape d'extraction 305 de la caractéristique géométrique d'un motif de ladite empreinte digitale candidate à partir de ladite image candidate,
- une étape de comparaison géométrique 306 entre la caractéristique géométrique du motif de ladite empreinte de référence et la caractéristique géométrique du motif de ladite empreinte candidate ,
- une étape de comparaison 307 entre l'information de configuration géométrique de référence et l'information de configuration géométrique candidate ;
- puis, une étape de détermination de cohérence géométrique 308 entre ladite empreinte de référence et ladite empreinte candidate en fonction du résultat de l'étape de comparaison géométrique et du résultat de l'étape de comparaison entre les informations de configuration géométrique,
- une étape de prise de décision 309 quant à l'authenticité de ladite empreinte digitale candidate en fonction du résultat de l'étape de détermination de cohérence géométrique.

Les étapes d'acquisition 300, 301 d'image de référence et/ou candidate peuvent être réalisées par capture en vue directe, par exemple au moyen de caméra dorsale d'un téléphone portable, de MorphoWave™ Compact ou par capture faite par réflexion totale sur une surface de pose de doigt(s) de type vitre par exemple, tel que dans les systèmes MorphoTop™, CBM, MSO.

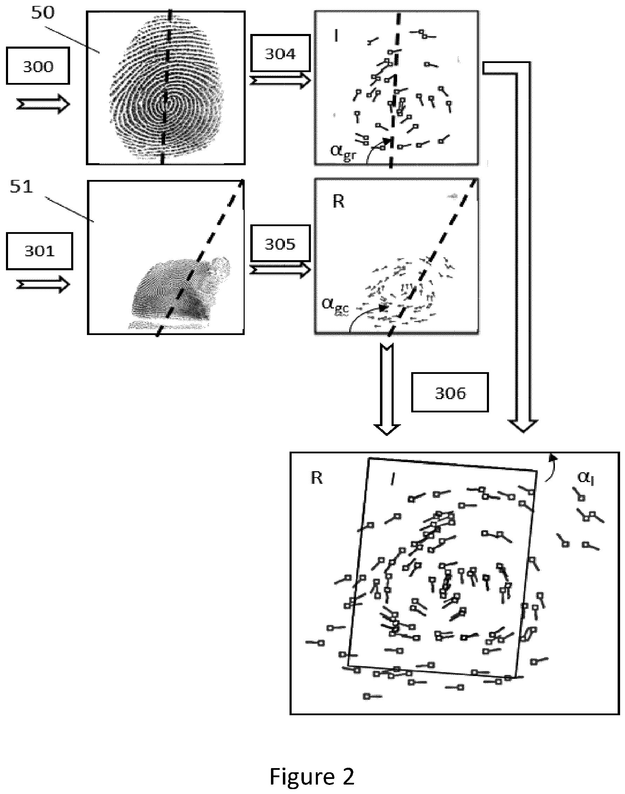

La figure 2 expose plus précisément les premières étapes du procédé de vérification biométrique 30 destiné à vérifier l'authenticité d'une empreinte digitale 51 selon un mode de réalisation de l'invention.
Dans cette figure, pour des raisons de clarté le procédé est appliqué à l'empreinte digitale d'un seul doigt mais plusieurs doigts pourraient également apparaître sur la première et/ou deuxième image acquises.
Sont plus précisément illustrées sur cette figure les étapes suivantes du procédé de vérification 30:

- une étape d'acquisition 300 d'une image de référence, d'une empreinte digitale de référence 50, ladite image de référence étant bidimensionnelle dans l'illustration pour des raisons de clarté mais pourrait également être une capture tridimensionnelle, le mode d'acquisition pouvant être avec ou sans contact, ladite image de référence étant celle d'une empreinte digitale de référence 50, et préférentiellement ici l'image contient la vue d'au moins la phalange distale du doigt auquel appartient l'empreinte, cette première étape d'acquisition étant notamment effectuée lors d'un enrôlement ou d'un pré-enrôlement ;
- une étape d'extraction 302 d'une information de configuration géométrique digitale de référence, cette information se base notamment de la forme, de l'orientation et/ou des dimensions de la partie acquise du doigt porteur de l'empreinte de référence 50, c'est à dire par exemple au moins la phalange distale,
- une étape d'extraction 304 d'une caractéristique géométrique d'un motif I de ladite empreinte digitale de référence 50 à partir de ladite image de référence, ici la caractéristique géométrique correspond au motif géométrique détaillé des minuties, mais des crêtes, tel que décrit dans le document de Feng, J., Ouyang, Z., & Cai, A. (2006). Fingerprint matching using ridges. Pattern Recognition, 39(11), 2131-2140, pourraient également être extraites en lieu et place des minuties ou en plus, en vue de la comparaison géométrique (ou « matching » en anglais) ultérieure ; notamment, l'ordre de ces deux premières étapes d'extraction entre elles peut varier
- une étape d'acquisition 301 d'une image candidate , ladite image candidate étant bidimensionnelle dans l'illustration pour des raisons de clarté mais pourrait également être une capture tridimensionnelle, le mode d'acquisition pouvant être avec ou sans contact, ladite image de référence étant celle d'une empreinte digitale candidate 51, et préférentiellement ici l'image contient la vue de toute la phalange distale du doigt auquel appartient l'empreinte, cette première étape d'acquisition étant notamment effectuée lors d'un contrôle de sécurité ou d'accès,
- une deuxième étape d'extraction 303 d'une information de configuration géométrique digitale candidate, cette information se base notamment de la forme, de l'orientation et/ou des dimensions de la partie acquise du doigt porteur de l'empreinte candidate, c'est à dire par exemple la phalange distale,
- une deuxième étape d'extraction 305 de la caractéristique géométrique d'un motif R de ladite empreinte digitale candidate 51 à partir de ladite deuxième image, ici la caractéristique géométrique correspond donc au motif géométrique détaillé des minuties puisque la caractéristique géométrique utilisée est commune aux deux extraction de manière à pourvoir ensuite servir à la comparaison de leurs résultats, notamment, l'ordre de ces deux deuxièmes étapes d'extraction entre elles peut varier ;
- une étape de comparaison géométrique 306 est effectuée entre la caractéristique géométrique du motif I de ladite empreinte de référence 50 et la caractéristique géométrique du motif R de ladite empreinte candidate 51 , il s'agit ici notamment de mettre en correspondance totalement ou partiellement les minuties extraites lors des étapes précédentes, c'est à dire les minuties du motif I de l'empreinte de référence 50 et les minuties du motif R de l'empreinte candidate 51, en procédant notamment à une détermination d'une transformation d'alignement entre les ceux ensembles de minuties, telle que transformation affine, translation-homothétie-rotation, l'homothétie permettant une mise à iso-échelle notamment si le capteur d'acquisition n'est pas de résolution normalisée tel que dans les téléphones portables, et, pendant cette étape de comparaison géométrique 306 (ou « matching » en anglais) ou préférentiellement à son issue, de calculer l'angle local de rotation $\alpha_l$ entre ledit ensemble de minuties de ladite empreinte de référence 50 et ledit ensemble de minuties de ladite empreinte candidate 51 ; ici cet angle local de rotation $\alpha_l$ correspond à l'angle de rotation à appliquer à la caractéristique géométrique d'un motif I de ladite empreinte digitale de référence 50 pour que les minuties du motif I de l'empreinte de référence 50 correspondent au mieux aux minuties de l'empreinte candidate 51, mais il pourrait également s'agir du sens inverse et dans ce cas le sens utilisé dans la suite des étapes est adapté en conséquence de manière à comparer des angles déterminés selon la même convention. La comparaison effectuée ici est totalement indépendante des informations de configuration géométrique digitale et préférentiellement, en cas de reconnaissance 1 : N une partie de cette étape de comparaison géométrique 306, à savoir l'e calcul de l'angle local de rotation $\alpha_l$, ainsi que la suite du procédé, s'effectue uniquement une fois l'empreinte de référence correspondante déterminée et s'applique donc à cette seule empreinte de référence , c'est-à-dire à la seule empreinte de référence restant après comparaison géométrique (ou « matching » en anglais), ce qui évite de multiplier les calculs et la mémorisation de leurs résultats..

Une minutie est un point qui se situe sur le changement de continuité des lignes papillaires situées en partie superficielle du derme, notamment du doigt. Le choix comme caractéristique géométrique d'un motif d'un descriptif géométrique d'un ensemble de minuties dudit motif permet ainsi de créer des cartes de minuties faciles à utiliser.

L'étape d'extraction 302 de l'information de configuration géométrique digitale de référence et l'étape d'extraction 304 de la caractéristique géométrique d'un motif I de l'empreinte de référence peuvent être combinées, de même pour l'étape d'extraction 303 d'une information de configuration géométrique digitale candidate et l'étape d'extraction 305 de la caractéristique géométrique d'un motif R de l'empreinte candidate. Par exemple, ces étapes d'extraction peuvent être menées par analyse d'image, si bien que non seulement le motif de l'empreinte en tant que tel est caractérisé géométriquement, ici via les descripteurs géométriques des minuties, mais également la ou les informations de configuration géométrique du doigt, basées notamment sur les dimensions de la phalange distale. En effet, l'information de configuration géométrique du doigt peut comprendre une orientation, dans le plan de l'image, par rapport aux axes de l'image, définissant le repère canonique de l'image, d'un axe de révolution digital représentant l'axe dudit doigt porteur dudit motif et/ou la position de l'extrémité distale dudit doigt porteur de ladite empreinte et/ou la position du pli de flexion de l'articulation Inter Phalangienne Distale dudit doigt porteur de ladite empreinte dans le même repère que les minuties de ladite empreinte, ce qui peut permettre de comparer les positions relatives, voire de déterminer une distance entre l'empreinte et l'extrémité distale dudit doigt porteur de ladite empreinte et/ou entre l'empreinte et le pli de flexion de l'articulation Inter Phalangienne Distale dudit doigt porteur de ladite empreinte, et notamment pour chaque doigt si plusieurs doigts apparaissent sur l'image acquise, cette information de configuration géométrique permettant donc de caractériser géométriquement l'empreinte par rapport au doigt qui la porte, au moyen d'un angle et/ou d'une position du motif I,R relativement à la géométrie digitale propre.

Par exemple, on exprime les positions des minuties d'un doigt dans un repère local centré sur le barycentre de la phalange distale, et dont l'axe des y est aligné avec l'axe principal du doigt, l'angle global du doigt par définition est donc nul dans ce repère, et l'extrémité distale et/ou le(s) pli(s) de flexion s'expriment alors simplement en coordonnée suivant l'axe y et s'il y a plusieurs doigts, on mémorise en plus la position et orientation de chacun des repères locaux par rapport au repère canonique de l'image.

Préférentiellement, l'acquisition, aussi bien 300 de l'empreinte de référence que 301 candidate, couvre plus que la phalange distale mais inclut également tout ou partie de la phalange intermédiaire et/ou proximale du doigt, de manière à améliorer la précision de l'information de configuration géométrique, notamment si elle repose sur une information angulaire ou sur la position du pli de flexion de l'articulation Inter Phalangienne Distale Ces informations de configuration géométrique du doigt sont préférentiellement extraites d'images acquises en vue directe, avec ou sans contact, par exemple au moyen d'un dispositif Morphowave ™, de tels dispositifs d'acquisition sans contact permettent notamment de visualiser la silhouette du doigt et plus particulièrement l'extrémité distale du doigt et par conséquent permettent in fine de déterminer les dimensions caractéristiques du doigt et notamment la position géométrique de l'empreinte par rapport à l'extrémité distale du doigt.

Dans le mode de réalisation présenté en figure 2, l'information de configuration géométrique du doigt correspond à l'orientation d'un axe de révolution digital représentant l'axe dudit doigt porteur dudit motif dans le repère canonique de l'image , axe qui est représenté en pointillé sur chacune des images et des motifs I, R, aucune translation n'étant ici réalisée entre l'image acquise et la représentation des motifs extraits, et la direction longitudinale digitale globale dudit doigt porteur de l'empreinte s'en déduit ce qui permet de représenter les angles $\alpha_{gr}$ d'orientation de l'axe de révolution digital du doigt porteur de l'empreinte de référence au motif I et $\alpha_{gc}$ d'orientation de l'axe de révolution digital du doigt porteur de l'empreinte candidate au motif R.

Dans le cas d'une image en trois dimensions par exemple cette direction peut être obtenue au moyen d'une projection dans le plan de de la première empreinte de l'axe de révolution du cylindre correspondant au doigt porteur de la première empreinte.

En variante, la direction longitudinale digitale globale dudit doigt porteur de l'empreinte peut être imposée, ce qui est le cas quand la caractéristique géométrique du motif extraite est directement codée relativement à l'information de configuration géométrique puisque cela impose par conception un angle nul de la direction longitudinale digitale globale dudit doigt porteur de l'empreinte dans l'image acquise. Par exemple, l'ensemble de minuties du motif I de ladite empreinte de référence 50 et/ou l'ensemble de minuties du motif R de ladite empreinte candidate 51 peuvent être codés relativement respectivement à la direction longitudinale digitale globale dudit doigt porteur de l'empreinte de référence 50 dans la première image, ou à la direction longitudinale digitale globale dudit doigt porteur de l'empreinte candidate 51 dans la deuxième image, ce qui permet de mémoriser l'ensemble de minuties du motif I de l'empreinte de référence 50 et l'ensemble de minuties du motif R de l'empreinte de référence 51 avec un angle représentatif d'une direction longitudinale digitale globale nul, ce formatage de la caractéristique géométrique du motif lors de son extraction impose une information de configuration géométrique digitale candidate sous forme d'angle représentatif d'une direction longitudinale digitale globale nul et permet ainsi un traitement simplifié par la suite puisque le ou les angles représentatif d'une direction longitudinale digitale globale respectivement de l'empreinte de référence 50 et/ou de l'empreinte candidate 51 seront nuls.

Lors de l'étape de comparaison 307 est effectuée la comparaison entre l'information de configuration géométrique de référence $\alpha_{gr}$ et l'information de configuration géométrique candidate $\alpha_{gc}$, et ici dans le cas d'une information de configuration géométrique de configuration angulaire il s'agit notamment de calculer l'angle global de rotation entre ladite empreinte de référence 50 et ladite empreinte candidate 51, qui est ici déterminé par soustraction entre l'angle $\alpha_{gc}$, et l'angle $\alpha_{gr}$ : $\alpha_{gc}$- $\alpha_{gr}$, en cohérence avec la convention précédemment adoptée ;

- puis, une étape de détermination de cohérence géométrique 308 entre ladite empreinte de référence 50 et ladite empreinte candidate 51 est effectuée en fonction du résultat de l'étape de comparaison géométrique $\alpha_l$ et du résultat de l'étape de comparaison entre les informations de configuration géométrique $\alpha_{gc}$-$\alpha_{gr}$, il s'agit par exemple ici de soustraire ces deux quantités entre elles et de comparer le résultat en valeur absolue à un seuil angulaire de cohérence, de l'ordre de 10 degrés ;
- l'étape 309 de prise de décision quant à l'authenticité de ladite empreinte digitale candidate 51 est alors fonction du résultat de l'étape de détermination de cohérence géométrique.

Le procédé illustré ici permet par une estimation de la direction de chaque doigt, porteur de l'empreinte de référence et de l'empreinte candidate, représentatif de la forme globale, de calculer l'angle global de rotation de la forme globale entre les deux acquisitions $\alpha_{gc}$,- $\alpha_{gr}$ et de calculer l'angle local de rotation des minuties $\alpha_l$, de manière à comparer ensuite ces angles de rotation.

Si les étapes d'extraction d'une information de configuration géométrique digitale comprennent respectivement :

- une étape de détermination de l'extrémité distale et/ou du pli de flexion de l'articulation Inter Phalangienne Distale dudit doigt portant le motif de l'empreinte de référence 50 et une étape de détermination d'une distance entre le motif de l'empreinte de référence et ladite extrémité distale et/ou ledit pli de flexion de l'articulation Inter Phalangienne Distale dudit doigt portant le motif de l'empreinte de référence 50 ,
- une étape de détermination de l'extrémité distale et/ou du pli de flexion de l'articulation Inter Phalangienne Distale dudit doigt portant le motif de ladite empreinte candidate 51 et
- une étape de détermination d'une distance entre le motif de l'empreinte candidate et ladite extrémité distale et/ou ledit pli de flexion de l'articulation Inter Phalangienne Distale dudit doigt portant le motif de l'empreinte candidate 51,
alors l'étape de comparaison 307 entre l'information de configuration géométrique de référence et l'information de configuration géométrique candidate comprendra une comparaison de ces mêmes distances de référence et candidate entre elles, de manière à comparer la même nature de distance.

Ainsi, l'étape de détermination de cohérence géométrique 308 comprend ici :

- une vérification de cohérence géométrique de position au cours de laquelle il est vérifié que la distance entre le motif de l'empreinte de référence et ladite extrémité distale et/ou ledit pli de flexion de l'articulation Inter Phalangienne Distale dudit doigt portant le motif de l'empreinte de référence est sensiblement identique à la distance entre le motif de l'empreinte candidate et ladite extrémité distale et/ou ledit pli de flexion de l'articulation Inter Phalangienne Distale dudit doigt portant le motif de l'empreinte candidate, notamment par comparaison à un seuil de distance de tolérance, et par sensiblement identique il est entendu ici une différence maximale d'environ 10% de la largeur de l'empreinte de référence, correspondant au seuil de distance de tolérance; le même raisonnement de vérification de cohérence géométrique pouvant s'appliquer aux positions relatives et non aux distances, et/ou

- une vérification de cohérence géométrique angulaire au cours de laquelle il est vérifié que ledit angle global de rotation et ledit angle local de rotation ($\alpha_l$) sont sensiblement identiques, notamment par comparaison à un seuil angulaire de tolérance, et par sensiblement identiques il est entendu ici une différence maximale d'environ 10 degrés, correspondant au seuil angulaire de tolérance. Il est à noter que par le terme environ, une tolérance de plus ou moins 10% de la quantité est admissible, ces valeurs étant indicatives.

Le procédé a été essentiellement décrit jusqu'ici dans le cadre d'une authentification biométrique (1 : 1), qui consiste à vérifier qu'une donnée biométrique, qui peut par exemple se trouver dans la carte à puce d'un passeport, est bien la même que celle de la personne qui détient le passeport, mais il s'applique également à l'identification (1 : N) qui consiste à retrouver une donnée biométrique parmi celles d'un grand nombre de personnes au sein d'une base de données. Dans le cadre de l'identification (1 : N), les empreintes de références seraient alors multiples de manière à pouvoir tester toute les références de la base de données, les étapes faisant intervenir les empreintes de référence seraient répétées, alors que celles concernant uniquement les empreintes candidates ne le seraient pas et préférentiellement, les étapes de comparaison 307 entre l'information de configuration géométrique de référence et l'information de configuration géométrique candidate, et de détermination de cohérence géométrique 308 entre ladite empreinte de référence et ladite empreinte candidate et de prise de décision 309 ne seraient appliquées qu'après la sélection de la meilleure empreinte à l'issue de l'étape itérative de comparaison géométrique 306 entre la caractéristique géométrique du motif de ladite empreinte de référence et la caractéristique géométrique du motif de ladite empreinte candidate qui aura permis de sélectionner l'empreinte de référence la plus similaire. C'est-à-dire qu'après identification de l'empreinte de référence correspondante, identifiée à l'étape de comparaison géométrique 306, le procédé se poursuit par le calcul de l'angle local puis par les étapes suivantes comme en cas d'authentification biométrique (1 : 1).

Lors de l'étape d'acquisition d'image de référence il est possible d'acquérir plusieurs empreintes, par exemple :

- au moins deux images de référence distinctes sont acquises, chacune comportant une empreinte digitale de référence de deux doigts différents d'une même main de référence
  et/ou
- l'image de référence comprend au moins deux empreintes digitales de référence de deux doigts différents d'une même main de référence,
  et en ce que lors de l'étape d'acquisition d'image candidate :
- au moins deux images candidates distinctes sont acquises, chacune comportant une empreinte digitale candidate de deux doigts différents d'une même main candidate
  et/ou
- l'image candidate comprend au moins deux empreintes digitales candidates de deux doigts différents d'une même main candidate.

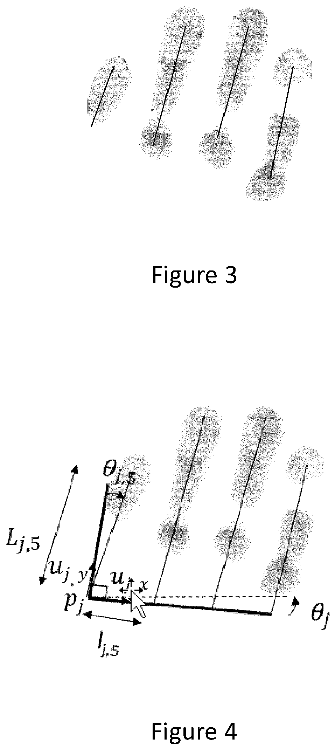

Ainsi, contrairement à la figure 2 dans laquelle une seule empreinte de référence et une seule empreinte candidate sont comparées de manière à vérifier par doigt l'alignement entre les caractéristiques globales de référence et candidate du doigt et l'alignement des minuties de référence et candidates, la figure 3 expose une image sur laquelle plusieurs empreintes de référence sont simultanément acquises et les axes tracés représentent les informations de configuration géométrique de configuration angulaires qui permettent de définir les angles d'orientation de l'axe de révolution digital de chaque doigt porteur d'empreinte de référence. Dans le cas de l'acquisition d'empreintes candidates le même traitement est appliqué.

En figure 4, est illustré un exemple de modèle quatre doigts superposé à l'empreinte de référence 50 de la figure 3 de manière à faire apparaître dans le repère canonique de l'image j un référentiel vectoriel du modèle quatre doigts.

Le référentiel orthonormé du modèle quatre doigts est représenté par les vecteurs $u_x$ et $u_y$ dont les axes sont représentés en traits noir épais et parmi lesquels l'axe portant $u_x$ correspond à une ligne de base reliant les quatre doigts du modèle, préférentiellement cette ligne de base correspond à une ligne droite reliant les articulations métacarpo-phalangiennes, appelées aussi premières jointures. Cette ligne de base est préférentiellement fixée de manière arbitraire, car ce qui est recherché est l'évaluation de la cohérence globale entre le modèle multi-doigts de référence et le modèle multi-doigts candidat, ces modèles pouvant d'ailleurs ne pas contenir le même nombre de doigts. En variante, cette ligne peut aussi être déterminée par réseau de neurones déterminant par exemple la position de la première jointure dans le repère de l'image de l'empreinte.

Ce modèle peut être utilisé à chaque fois que plusieurs empreintes, d'au moins deux doigts, sont acquises dans la même image, que cela concerne les empreintes candidates ou de référence. Le modèle multi-doigts constitue alors un ensemble d'informations de configuration géométrique, ce qui ne nécessite plus la détermination en tant que tels des angles globaux individuellement pour chaque doigt de chaque image puisque c'est la cohérence globale entre les deux modèles multi-doigts de référence et candidate, qui est alors examinée lors de l'étape de comparaison, sans nécessiter de calculer tous les paramètres des modèles. Dans ce mode de réalisation la détermination d'angles globaux, par définition liés à la forme globale du doigt, est alors optionnelle mais présente l'intérêt de robustifier l'identification et par exemple en cas d'images acquises séparément 2 doigts par 2 doigts, avec un doigt commun, pour une même main, cela sert à fusionner les images entres elles pour en obtenir une seule avec un seul modèle multi-doigts.

Dans le cas de l'acquisition multi doigts comme représenté en figure 3 et 4, la vérification anti-fraude est encore renforcée, puisque la cohérence est vérifiée via une multiplicité d'informations de configurations géométriques, c'est-à-dire non seulement avec un angle local et un angle et/ou distance globale mais avec ces mêmes paramètres multipliés par le nombre de doigts en commun dans les acquisitions de référence et candidate, en outre d'autres paramètres géométriques tels que l'espacement inter doigts et/ou la longueur des doigts sont des paramètres géométriques qui peuvent servir lors de l'étape 308 de détermination de cohérence géométrique.

Ainsi, en cas d'acquisition de quatre doigts tel qu'illustré en figure 4, le modèle multi doigts (appelé aussi modèle partiel de main) de main gauche est ici défini dans le repère canonique de l'image j et s'écrit par relation vectorielle en deux dimensions pour chaque doigt i $x_{j,i} = p_j + R_{\theta_j}(i.l_{j,j}.u_x + L_{j,i}R_{\theta_{j,i}}(u_y))$ dans l'image j, qu'elle soit de référence ou candidate, l'indice numérique i identifie le numéro du doigt dans le modèle multi doigts, la convention arbitraire adoptée ici sur la figure 4 étant le chiffre 1 pour le pouce, 2 pour l'index, 3 pour le majeur, 4 pour l'annulaire et 5 pour l'auriculaire; :

- $R_{\theta_j}$ la fonction de rotation d'angle $\theta_j$ ;
- $u_{j,x}$ et $u_{j,y}$ définissant les vecteurs unitaires du référentiel orthonormé du modèle multi doigts avec respectivement $u_{j,x} = R_{\theta_j}(u_x)$ et pareillement pour $u_{j,y}$ puisque $u_x$ et $u_y$ sont des axes du repère canonique, alors que $u_{j,x}$ et $u_{j,y}$ sont des axes liés au modèle de l'image j ;
- $x_{j,i}$ définissant le vecteur de position en deux dimensions, abscisse et ordonnées des points du doigt i dans le référentiel du modèle multi doigts de l'image ; le doigt étant assimilé à un segment de droite
- $p_j$ définissant la position d'un point caractéristique de l'image de main acquise dans le repère canonique de l'image, qui a pour origine le point en haut à gauche, avec axe d'abscisse vers la droite, axe d'ordonnées vers le bas, le point caractéristique de l'image de main acquise étant défini ici comme la première jointure de l'auriculaire (doigt référencé 5) portant l'empreinte de référence de l'auriculaire , en variante le point p peut correspondre à la position de la première jointure de l'index (doigt référencé 2) portant l'empreinte de référence de l'index ;

- $\theta_j$ définissant l'angle de la main dans l'image acquise, mesuré entre la ligne de base et l'axe horizontale du repère canonique de l'image tracé en traits pointillés, la ligne de base étant tracée en trait épais et étant définie comme la droite obtenue par régression à partir des quatre points représentatifs des premières jointures de chaque doigt, ce qui permet de n'avoir qu'une droite pour la main et non un segment de droite par inter phalanges, sans dégrader pour autant de manière sensible l'évaluation des longueurs de doigts,;
- $\theta_{j,i}$ définissant l'angle intra-main entre le vecteur $u_y$ du référentiel du modèle multi doigts et l'axe du doigt i concerné;
- $l_{j,i}$ désignant ici, par choix de convention, la longueur inter-doigts successifs entre la première jointure du doigt i et celle du doigt i-1 ;
- $L_{j,i}$ désignant la longueur entre la première jointure et l'extrémité du doigt i. $p_j$ et $\theta_j$ conditionnent les axes du référentiel orthonormé du modèle multi-doigts liés à la position de la main dans l'image acquise.

En cas d'image acquise, comme sur la figure 4, avec contact, la silhouette du doigt n'est pas disponible car la pression sur le doigt ne sera pas nécessairement suffisante pour rendre visible sur l'image la limite distale du doigt. L'extrémité distale du doigt est définie préférentiellement comme étant le centroïde de la pulpe du bout de la phalange distale du doigt, ce qui évite notamment les risques de prise en compte de la longueur des ongles.

Néanmoins, en fonction du mode d'acquisition de l'image l'extrémité distale du doigt pourrait être définie différemment. Par exemple, si les acquisitions 300, 301 sont effectuées uniquement par système optique sans contact, via un capteur optique de téléphone portable par exemple, la silhouette du doigt est visible, si bien que l'extrémité distale du doigt peut être définie comme étant le point le plus éloigné du doigt appartenant à la limite distale du doigt.

Préférentiellement, lors de l'étape d'acquisition d'images de référence 300, une image est acquise doigts serrés et une autre image est acquise doigts écartés, car cette double acquisition permet de résoudre facilement le système d'équations du modèle quatre doigts qui comporte alors ici 19 inconnues dont 14 sont liées au placement, c'est à dire 7 paramètres pour chacune des deux images que sont :

- 4 angles $\theta_{j,i}$ (un pour chaque doigt du modèle quatre-doigt ici représenté),
- 1 angle de la main $\theta_j$ ,
- les 2 coordonnées (abscisse et ordonnée) du point $p_j$

et dont 5 sont intrinsèques à la géométrie de la main et qui sont les 4 L$_{j,i}$ de longueur de chaque doigt ainsi que la largeur totale de la main, c'est-à-dire ici la somme des trois longueurs inter-doigts l$_{j,i}$

En effet, la double acquisition permet ici de déterminer 20 contraintes que sont :

- 16 positions : pour chacun des quatre doigts leur coordonnées dans chacune des deux vues : 2*4*2
- 4 angles locaux de rotation : un pour chaque doigt correspondant entre les deux images sachant qu'on obtient une équation sur la différence d'angle entre ces deux doigts en exprimant les empreintes dans le repère de l'image.

De même, on obtient la contrainte d'égalité avec ici j= 1 pour une image de référence et j=2 pour une image candidate : $\alpha_{li} = (\theta_{2,i} + \theta_2 )-(\theta_{1,i} + \theta_1 )$ , qui pourrait aussi s'exprimer comme étant la différence entre l'angle représentatif $\alpha_{gc}$ d'une direction longitudinale digitale globale dans l'image candidate j=2 et l'angle représentatif $\alpha_{gr}$ d'une direction longitudinale digitale globale de référence j=1 puisque par définition c'est la correspondance entre l'angle global de rotation entre ladite empreinte de référence 50 et ladite empreinte candidate 51, qui est ici déterminé par soustraction entre l'angle $\alpha_{gc}$, et l'angle $\alpha_{gr}$ : $\alpha_{gc}$- $\alpha_{gr}$ qui doit correspondre à l'angle local de rotation $\alpha_l$, c'est-à-dire d'alignement des minuties comme illustré en figure 2.

La résolution exacte n'est pas nécessairement recherchée, mais davantage la minimisation, notamment si on a moins de quatre doigts dans le modèle, car la résolution ne sera alors pas possible, il s'agira alors de réaliser la minimisation et de vérifier le résidu, c'est à dire d'appliquer le modèle avec ses contraintes $x_i$ = *f(paramètres)* et de vérifier si le modèle peut s'accorder aux observations en ayant $\|x_i - f(paramètres)\|^2 < \varepsilon$, avec $\varepsilon$ très faible, de l'ordre de 10% du carré de la largeur moyenne du doigt.

Plutôt que de résoudre de manière exacte, en vue de la minimisation, toutes les images acquises, aussi bien de référence que candidates, peuvent être superposées de manière à sur-contraindre le système et ainsi pour chaque image ajoutée avec un modèle 4 doigts : 7 inconnues et 12 (4*2 positions +4 angles d'information de de configuration géométrique $\alpha_{gi}$) équations supplémentaires s'ajoutent.

L'utilisation d'autres contraintes additionnelles ou en variante est également possible, telles que la contrainte des angles croissants, c'est-à-dire que $\theta^{j}_{i+1} -$

$\theta^{j}_{i} \geq 0$ ou $\theta^{j}_{i+1} - \theta^{j}_{i} \geq \alpha$ avec $\alpha$ faiblement négatif, ce qui signifie que les doigts peuvent être en éventail mais ne se croisent pas.

En outre, l'orientation globale de chaque doigt peut également être une contrainte additionnelle car géométriquement si on a l'angle global d'un doigt $\gamma_i$, alors $\theta + \theta_i = \gamma_i$ dans le repère canonique de l'image, ce qui permet de détecter une incohérence entre angle local et angle global ou être utilisé dans le cas où tous les doigts n'ont pas pu être mis en correspondance.

La résolution du système d'équations, ou la minimisation de l'erreur quadratique, permet ainsi de déterminer la cohérence géométrique 308 entre les différentes empreintes de référence et les différentes empreintes candidates, pour cela il faut a minima deux images j, une référence et une candidate. En effet, en cas de minimisation, il s'agit ici non pas de déterminer toute les inconnues du modèle multi doigts mais uniquement de déterminer si au moins une solution existe une fois que les multiples contraintes ont été appliquées au modèle ainsi sur-contraint.

De même, une autre contrainte concernant les longueurs des doigts dans le modèle multi doigts peut être ajoutée, telle que des relations entre les longueur Li, du type auriculaire plus petit qu'annulaire par exemple, ou encore par ajout parmi les termes à minimiser d'un second terme f(L1,L2,L3,L4) constitué d'une fonction apprise, par exemple au moyen d'une machine à vecteurs de support (en anglais support-vector machine, SVM) , cette contrainte additionnelle permettant de discriminer si ladite longueur est possible ou pas, de même pour la longueur li inter-doigts successifs ou leur somme l.

En effet, un modèle multi doigts de trois doigts ou plus peut également être reconstitué sur la base de plusieurs images acquises, chaque image contenant au moins deux doigts dont un commun à une autre image acquise, cette reconstitution étant effectuée par fusion des images acquises après mise à iso-échelle selon un procédé connu de l'homme du métier, cette reconstitution avec acquisition de plusieurs images intervenant préférentiellement dans l'étape d'acquisition respectivement d'images de référence 300 et/ou candidates 301.

Le dispositif de vérification biométrique destiné à vérifier l'authenticité d'une empreinte digitale 51 apte à mettre en oeuvre le procédé de vérification biométrique selon l'invention peut comporter plusieurs ensembles d'unités se distinguant notamment entre unité(s) dédiée(s) aux étapes afférentes exclusivement au traitement des images ou données de référence et unité(s) dédiées aux étapes de traitement des images ou données candidate(s) voire de référence, c'est-à-dire non dédiées aux étapes faisant exclusivement intervenir les images ou données de référence. Parmi ces deux ensembles d'entités chacune ou une partie des unités de l'ensemble comporte des systèmes optiques d'acquisition des images respectivement de référence ou candidate(s).

Ce dispositif comporte au moins un processeur apte à exécuter les étapes d'extraction 302, 304, préférentiellement au moins un processeur est hébergé dans chaque ensemble d'unité et exécute respectivement l'étape d'extraction 304, 306 de caractéristique géométrique qui lui est propre et l'étape d'extraction 302, 303 d'information de configuration qui lui est propre.

Les processeurs des ensembles d'entités sont reliés à un espace mémoire commun sécurisé, ces mémoires et canaux de communication de liaison appartiennent au dispositif et peuvent être physiques et, par exemple une liaison au moyen d'un bus à une mémoire vive , une mémoire morte et/ou une mémoire non volatile, en variante ou en supplément ledit processeur et/ou espace mémoire peuvent être hébergés dans un serveur tiers ou dans une infrastructure virtualisée (ou cloud en langue anglaise) et le canal de communication comprend par exemple une antenne et un réseau sans fil connecté entre eux, par exemple des réseaux étendus, des réseaux WiFi ou des réseaux de téléphonie mobile.

Dans l'espace mémoire sont notamment hébergées les caractéristiques géométriques de référence et les informations de configuration de référence.

Au moins un processeur de l'ensemble d'unités dédiées aux étapes de traitement des images ou données candidate(s) voire de référence exécute l'étape de comparaison 307 entre l'information de configuration géométrique de référence et l'information de configuration géométrique candidate ainsi que l'étape de détermination de cohérence géométrique 308 entre ladite empreinte de référence et ladite empreinte candidate en fonction du résultat de l'étape de comparaison géométrique et du résultat de l'étape de comparaison entre les informations de configuration géométrique, et préférentiellement ce même processeur exécute l'étape de prise de décision 309 quant à l'authenticité de ladite empreinte digitale candidate 51 en fonction du résultat de l'étape de détermination de cohérence géométrique.

Le procédé de vérification biométrique selon l'invention est donc mis en oeuvre par ordinateur.

**Revendications**

1. Procédé de vérification biométrique (30) destiné à vérifier l'authenticité d'une empreinte digitale (51), le procédé de vérification (30) comportant :

   - une étape d'acquisition (300) d'une image de référence, notamment bidimensionnelle, d'une empreinte digitale de référence (50),
   - une étape d'extraction (302) d'une information de configuration géométrique digitale de référence ($\alpha_{gr}$),
   - une étape d'extraction (304) d'une caractéristique géométrique d'un motif (I) de ladite empreinte digitale de référence (50) à partir de ladite image de référence,
   - une étape d'acquisition (301) d'une image candidate, notamment bidimensionnelle, d'une empreinte digitale candidate (51),
   - une étape d'extraction (303) d'une information de configuration géométrique digitale candidate ($\alpha_{gc}$),
   - une étape d'extraction (305) de la caractéristique géométrique d'un motif (R) de ladite empreinte digitale candidate (51) à partir de ladite image candidate,
   - une étape de comparaison géométrique (306) entre la caractéristique géométrique du motif (I) de ladite empreinte de référence (50) et la caractéristique géométrique du motif (R) de ladite empreinte candidate (51) , lesdites caractéristiques géométriques des motifs (I, R) étant de nature locale ;
   - puis, une étape de détermination de cohérence géométrique (308) entre ladite empreinte de référence et ladite empreinte candidate en fonction du résultat de l'étape de comparaison géométrique et des informations de configuration géométrique ($\alpha_{gc}$, $\alpha_{gr}$), lesdites informations de configuration géométrique ($\alpha_{gc}$, $\alpha_{gr}$) étant de nature globale ;
   - une étape de prise de décision (309) quant à l'authenticité de ladite empreinte digitale candidate (51) en fonction du résultat de l'étape de détermination de cohérence géométrique.

2. Procédé de vérification biométrique (30) selon la revendication précédente **caractérisé en ce qu'**il comporte une étape (307) de comparaison entre l'information de configuration géométrique de référence et l'information de configuration géométrique candidate, et l'étape de détermination de cohérence géométrique (308) entre ladite empreinte de référence et ladite empreinte candidate est fonction de son résultat.

3. Procédé de vérification biométrique (30) selon l'une quelconque des revendications précédentes **caractérisé en ce que** la caractéristique géométrique d'un motif comprend un descriptif géométrique d'un ensemble de minuties dudit motif.

4. Procédé de vérification biométrique (30) selon l'une quelconque des revendications précédentes **caractérisé en ce qu'**il comprend :

   - une étape de détermination de position d'une extrémité distale et/ou d'un pli de flexion d'une articulation Inter Phalangienne Distale dudit doigt portant le motif de l'empreinte de référence (50), notamment dans un repère canonique de l'image de référence ;
   - une étape de détermination de position d'une extrémité distale et/ou d'un pli de flexion d'une articulation Inter Phalangienne Distale dudit doigt portant le motif de ladite empreinte candidate (51), notamment dans un repère canonique de l'image candidate.

**5.** Procédé de vérification biométrique (30) selon l'une quelconque des revendications précédentes **caractérisé en ce que** l'information de configuration géométrique ($\alpha_{gc}$, $\alpha_{gr}$) comprend respectivement :

- un angle ($\alpha_{gc}$, $\alpha_{gr}$) représentatif d'une direction longitudinale digitale globale dans l'image acquise, notamment l'information de configuration géométrique comprend une direction d'un axe de révolution digital représentant l'axe dudit doigt porteur de ladite empreinte (50, 51) notamment dans un repère canonique de l'image acquise
et/ou

- une position de chacun desdits motifs (I,R) relativement à une géométrie digitale propre, telle que l'extrémité distale dudit doigt porteur de ladite empreinte et/ou le pli de flexion d'une articulation Inter Phalangienne Distale dudit doigt porteur de ladite empreinte (50, 51).

**6.** Procédé de vérification biométrique (30) selon l'une quelconque des revendications précédentes **caractérisé en ce qu'**il comprend :

- une étape de calcul d'un angle global de rotation ($\alpha_{gc}$ - $\alpha_{gr}$, ($\theta_{2,i}$ + $\theta_2$ ) - ($\theta_{1,i}$ + $\theta_1$ )) entre ladite empreinte de référence (50) et ladite empreinte candidate (51) ;
- une étape de calcul d'un angle local de rotation ($\alpha_l$ ) entre ladite caractéristique géométrique du motif (I) de ladite empreinte de référence (50) et ladite caractéristique géométrique d'un motif (R) de ladite empreinte candidate (51).

**7.** Procédé de vérification biométrique (30) selon l'une quelconque des revendications 5 à 6 **caractérisé en ce que** l'étape de détermination de cohérence géométrique (308) comprend :

- une vérification de cohérence géométrique de position au cours de laquelle il est vérifié que les positions relatives entre le motif de l'empreinte de référence et ladite extrémité distale et/ou ledit pli de flexion de l'articulation Inter Phalangienne Distale dudit doigt portant le motif de l'empreinte de référence sont sensiblement identique aux positions relatives entre le motif de l'empreinte candidate et ladite extrémité distale et/ou ledit pli de flexion de l'articulation Inter Phalangienne Distale dudit doigt portant le motif de l'empreinte candidate ;
et/ou

- une vérification de cohérence géométrique angulaire au cours de laquelle il est vérifié que ledit angle global de rotation et ledit angle local de rotation ($\alpha_l$ ) sont sensiblement identiques.

**8.** Procédé de vérification biométrique (30) selon l'une quelconque des revendications 6 à 7 **caractérisé en ce que** l'étape de calcul d'un angle local de rotation ($\alpha_l$) entre ledit motif de ladite empreinte de référence (50) et ledit motif de ladite empreinte candidate (51) comprend une étape de mise en correspondance desdits motifs et de détermination d'une transformation d'alignement entre les deux motifs, telle que transformation affine, translation-homothétie-rotation.

**9.** Procédé de vérification biométrique (30) selon l'une quelconque des revendications précédentes **caractérisé en ce que** ladite image de référence de l'empreinte digitale de référence (51) est acquise par capture photographique ou vidéo, au moyen d'un dispositif avec ou sans contact, notamment lors d'un enrôlement ou pré-enrôlement à distance ou sur site et ladite image candidate de l'empreinte digitale candidate est acquise par capture photographique ou vidéo, au moyen d'un dispositif avec ou sans contact, notamment lors d'un contrôle de sécurité.

**10.** Procédé de vérification biométrique (30) selon l'une quelconque des revendications précédentes **caractérisé en ce qu'**il comprend également une étape de modélisation multi doigts.

**11.** Procédé de vérification biométrique (30) selon l'une quelconque des revendications précédentes **caractérisé en ce que** lors de l'étape d'acquisition d'image de référence (300) :

- au moins deux images de référence distinctes sont acquises, chacune comportant une empreinte digitale de référence de deux doigts différents d'une même main de référence et/ou
- l'image de référence comprend au moins deux empreintes digitales de référence de deux doigts différents d'une même main de référence,

et **en ce que** lors de l'étape d'acquisition d'image candidate (301) :

- au moins deux images candidates distinctes sont acquises, chacune comportant une empreinte digitale candidate desdits deux doigts différents homologues d'une main homologue candidate et/ou
- l'image candidate comprend au moins deux empreintes digitales candidates de deux doigts différents d'une même main candidate.

**12.** Procédé de vérification biométrique (30) selon la revendication précédente **caractérisé en ce que** lors de l'étape d'acquisition d'images de référence (300), une image est acquise doigts serrés et une autre image est acquise doigts écartés.

**13.** Dispositif de vérification biométrique destiné à vérifier l'authenticité d'une empreinte digitale (51) apte à mettre en oeuvre le procédé de vérification biométrique (30) selon l'une quelconque des revendications précédentes.

30

Figure 1

Figure 2

Figure 3

Figure 4

Europäisches
Patentamt

European
Patent Office

Office européen
des brevets

**RAPPORT DE RECHERCHE EUROPEENNE**

Numéro de la demande

EP 23 18 7695

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | EP 3 792 819 A1 (THALES DIS FRANCE SA [FR]) 17 mars 2021 (2021-03-17) | 1-3,5-9, 13 | INV. G06V40/12 |
| Y | * figure 1 *<br>* figure 3 *<br>* figures 4,5 * | 4,10-12 | |
| Y | GUPTA PUNEET ET AL: "An efficient slap fingerprint segmentation and hand classification algorithm", NEUROCOMPUTING, vol. 142, 20 mai 2014 (2014-05-20), pages 464-477, XP028879280, ISSN: 0925-2312, DOI: 10.1016/J.NEUCOM.2014.03.049 * le document en entier * | 4,10-12 | |
| A | US 8 588 484 B2 (WANG LI [GB]; BHALERAO ABHIR [GB] ET AL.) 19 novembre 2013 (2013-11-19) * figure 2 *<br>* figure 5 *<br>* figure 7 * | 1-13 | |
| | | | DOMAINES TECHNIQUES RECHERCHES (IPC) |
| A | JAIN A K ET AL: "An identity-authentication system using fingerprints", PROCEEDINGS OF THE IEEE, IEEE. NEW YORK, US, vol. 85, no. 9, 1 septembre 1997 (1997-09-01), pages 1365-1388, XP002261867, ISSN: 0018-9219, DOI: 10.1109/5.628674 * le document en entier * | 1-13 | G06V |

Le présent rapport a été établi pour toutes les revendications

| Lieu de la recherche | Date d'achèvement de la recherche | Examinateur |
|---|---|---|
| La Haye | 26 octobre 2023 | Martinière, Anthony |

**ANNEXE AU RAPPORT DE RECHERCHE EUROPEENNE
RELATIF A LA DEMANDE DE BREVET EUROPEEN NO.**

EP 23 18 7695

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26−10−2023

| Document brevet cité au rapport de recherche | Date de publication | Membre(s) de la famille de brevet(s) | | Date de publication |
|---|---|---|---|---|
| EP 3792819 A1 | 17−03−2021 | EP | 3792819 A1 | 17−03−2021 |
| | | EP | 4028937 A1 | 20−07−2022 |
| | | US | 2022335750 A1 | 20−10−2022 |
| | | WO | 2021048147 A1 | 18−03−2021 |
| US 8588484 B2 | 19−11−2013 | AT | 548707 T | 15−03−2012 |
| | | CA | 2712233 A1 | 31−12−2008 |
| | | EP | 2174261 A1 | 14−04−2010 |
| | | GB | 2450479 A | 31−12−2008 |
| | | US | 2010266168 A1 | 21−10−2010 |
| | | WO | 2009001121 A1 | 31−12−2008 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

• EP 3073416 A

**Littérature non-brevet citée dans la description**

• **DE FENG, J. ; OUYANG, Z. ; CAI, A.** Fingerprint matching using ridges. *Pattern Recognition,* 2006, vol. 39 (11), 2131-2140